# FASCICULE DE BREVET EUROPEEN

(11) **EP 2 822 285 B1**
(45) Date de publication et mention de la délivrance du brevet: **30.08.2017**
(21) Numéro de dépôt: 13175183.6
(22) Date de dépôt: 04.07.2013
(51) Int. Cl.: H04N 21/41, H04N 21/4367

(54) **Appariement de dispositifs au travers de réseaux distincts**
Zusammenlegung von Vorrichtungen über verschiedene Netze
Pairing devices through distinct networks

(43) Date de publication de la demande: 07.01.2015
(73) Titulaire: Nagravision S.A., 1033 Cheseaux-sur-Lausanne (CH)
(72) Inventeur: Wendling, Bertrand, 01220 Divonne-les-Bains (FR)
(74) Mandataire: Leman Consulting S.A.

(56) Documents cités:
- EP-A2- 1 133 120
- EP-A2- 1 557 999
- US-A1- 2006 107 299
- US-A1- 2009 298 535
- US-A1- 2009 325 491

## Description

### Domaine de l'invention

La présente invention concerne une méthode d'appariement d'au moins deux dispositifs connectés chacun à un réseau de communication dont l'un se distingue de l'autre par sa nature et son protocole de communication.

### Arrière plan technique

Les appareils ou dispositifs électroniques, tels que les téléphones mobiles, les assistants numériques personnels (PDA), les ordinateurs portables, les tablettes et les téléviseurs numériques, etc. sont en général pourvus de fonctions de communication sur Internet et peuvent également communiquer entre eux via des réseaux câblés ou sans fil. En particulier, de tels dispositifs électroniques intelligents sont personnalisés en fonction des caractéristiques de l'utilisateur et des environnements de réseau entre des appareils. Par exemple, les téléphones portables intelligents offrent principalement des services Internet personnalisés.

Le téléviseur numérique permet également à un utilisateur d'accéder à Internet grâce à un navigateur intégré ou au moyen d'un appareil externe compatible à Internet connecté au téléviseur. Plusieurs solutions de connexion personnalisée d'appareils portables à des téléviseurs ou à des récepteurs multimédia comme des décodeurs sont décrites dans l'art antérieur comme par exemple :
Le document US20060155653A1 décrit un système d'authentification dynamique pour télévision numérique comprenant un téléphone portable exploité par un utilisateur en liaison avec un récepteur de télévision numérique. Le téléphone portable est configuré pour l'envoi et la réception de messages courts SMS. Le récepteur de télévision comprend un module de sécurité inviolable sous forme de carte à puce configurée pour générer un code d'authentification dynamique à afficher sur l'écran du récepteur de télévision. L'utilisateur lit le code d'authentification et l'introduit dans le téléphone portable. Ce code d'authentification et des données spécifiques d'application sont transmis par SMS à un serveur d'application utilisant un système de validation de code d'authentification. Lorsque ce code d'authentification est accepté le service requis est accordé à l'utilisateur.

Le document US20120324076A1 décrit des systèmes et des méthodes pour associer ou jumeler un appareil mobile avec un dispositif de sortie inclus dans un système interactif. Plus particulièrement, l'appareil mobile comprenant une application mobile est inscrit sur un serveur de connexion mobile. Afin de d'activer le jumelage, l'utilisateur introduit une requête d'un code d'appariement via le système interactif. En réponse à la requête, le serveur de connexion mobile retourne un code d'appariement qui sera affiché par le dispositif de sortie. L'utilisateur saisit ensuite le code d'appariement dans l'application de l'appareil mobile. L'application mobile renvoie le code d'appariement introduit au serveur de connexion mobile. En réponse à une correspondance entre le code d'appariement fourni au système interactif pour la sortie à l'utilisateur et le code d'appariement introduit dans l'appareil mobile de l'utilisateur et fourni au le serveur de connexion mobile, l'appareil mobile est apparié au système interactif. L'utilisateur peut alors s'interfacer avec le système interactif en utilisant le dispositif mobile. En outre, l'utilisateur peut accéder à un contenu personnalisé, commander d'autre contenus disponibles, et / ou autoriser un paiement pour des contenus ou services.

Le document WO03051024A2 décrit un système de décodage de services codés comprenant : un décodeur pour décoder des services encodés connecté à un moniteur, des moyens de contrôle coopérant avec le décodeur et exécutant une application de service de messages de texte pour le formater des données d'entrée en un message de texte, des moyens de transmission du message de texte, et des moyens de réception et d'affichage sur le moniteur d'un message de texte reçu. Le service de messages de texte peut être un service de messages courts (SMS) qui permet à un utilisateur d'envoyer et de recevoir un message court par l'intermédiaire de systèmes de télécommunications, tels que le système GSM cellulaire ou via un modem sur ligne téléphonique. Dans certains modes de réalisation, le dispositif peut être logé dans un seul boîtier ou set top box. L'utilisateur utilise une télécommande à émission infrarouge pour entrer le message court à transmettre qui s'affiche sur l'écran du moniteur.

Le document US2012096503A1 décrit un système et une méthode pour fournir des services d'accompagnement à un équipement client utilisant une infrastructure de service basée sur le protocole IP (Internet Protocol). Selon un mode de réalisation, un serveur passerelle couplé à un appareil compatible IP via un réseau IP. Le serveur passerelle peut fournir des services Internet à une application d'accompagnement tournant sur l'appareil IP. Les services Internet définissent un ensemble de fonctions qui peuvent être supportées par l'équipement client. Ces fonctions sont prises en charge par une application d'accompagnement client tournant sur l'équipement client en fournissant un accès à certaines fonctionnalités matérielles et logicielles de l'équipement client. En plus des services Internet, le serveur passerelle peut fournir des services de gestion de réseau qui activent ou désactivent l'appariement de l'appareil IP avec l'équipement client cible approprié. Le serveur passerelle peut également authentifier les appareils, gérer les ressources réseau et d'exécuter la transmission sécurisée de messages entre l'appareil IP et l'équipement client cible. En outre, le serveur passerelle peut fournir un routage de messages et une fonction de relais qui peut acheminer les messages vers un ou plusieurs serveurs de distribution et de routage qui coopèrent pour définir un trajet à travers le réseau IP pour transmettre des messages entre les dispositifs appariés.

Le document US20090298535A1 décrit un dispositif portable de communication comprenant une application pour contrôler du contenu multimédia transmis à un récepteur/décodeur via un réseau de distribution de contenu. Le dispositif portable comporte un émetteur / récepteur pour transmettre des commandes de gestion de contenu multimédia au récepteur/décodeur via un serveur connecté au réseau de distribution de contenu. Selon des variantes, le réseau de distribution de contenu multimédia est un réseau propriétaire et l'émetteur / récepteur du dispositif portable est configuré pour communiquer via Internet. Une interface utilisateur graphique permet la gestion et la sélection de contenus fournis au récepteur/décodeur. Une session de communication peut être établie entre le dispositif portable et le réseau de distribution de contenu par un serveur connecté à un réseau de fournisseurs de contenus recevant un appel entrant du dispositif portable. Selon une option, la session peut être étable par un appel sortant du serveur du réseau de distribution de contenu vers le dispositif portable. Dans les deux cas un serveur du réseau de distribution de contenu sert d'intermédiaire dans une session de communication entre le dispositif portable et le récepteur/décodeur.

Le document EP1133120A2 décrit un système de contrôle de données dans un réseau domestique dans lequel un terminal portable contrôle à distance au moins une unité contrôlable connectée au réseau domestique en transmettant des données à une passerelle connectée au dit réseau domestique. La passerelle comprend une unité de connexion permettant de connecter le réseau domestique à Internet, une unité de réception de données fournies par des sources externes au réseau domestique et une première unité de connexion pour transmettre au réseau domestique des données reçues via une liaison sans fil locale. Le terminal portable comprend une seconde unité de connexion pour transmettre des données à la première unité de connexion via la liaison sans fil locale, une fonction de transmission de données de contrôle pour contrôler l'unité contrôlable et une fonction de navigation pour consulter des données HTML transmises par la passerelle. Les données de contrôle et les données HTML sont transmises au réseau domestique via la liaison sans fil locale lorsqu'une connexion peut être étable entre la première et la seconde unité de connexion, ou via Internet lorsque la connexion locale n'a pas pu être étable entre ces deux unités de connexion.

En général un appariement entre un appareil d'accompagnement et un récepteur décodeur ou un téléviseur s'effectue facilement lorsque ces appareils sont connectés à un même réseau domestique. Cependant, les téléphones portables ou les tablettes peuvent être connectés à des réseaux différents comme par exemple le téléviseur est connecté à un réseau DSL (Digital Subscriber Line) à protocole IP tandis que le téléphone portable est connecté à un réseau mobile 3G (UMTS) ou 4G (LTE) ou autre réseau mobile sans fil. Dans ce cas, un appariement ne peut pas être réalisé de manière simple par une découverte d'appareils utilisant des protocoles propres au réseau domestiques, car le téléphone portable connecté à un réseau particulier 3G ou 4G ne sera pas visible sur le réseau domestique.

### Description sommaire de l'invention

Un but de la présente invention consiste à fournir une solution simple d'appariement entre un récepteur multimédia connecté à un réseau du type réseau IP (Internet Protocol) et au moins un équipement mobile connecté à un second réseau du type réseau mobile à large bande 3G / 4G ou autre.

Ce but est atteint par une méthode d'appariement entre un récepteur multimédia connecté à un réseau de communication IP et au moins un équipement mobile connecté à un réseau mobile de communication utilisant un protocole de communication distinct du réseau IP selon la revendication 1,

La solution proposée consiste à introduire un identificateur personnel unique comme par exemple un numéro de téléphone ou une adresse de courrier électronique dans une application installée dans un récepteur multimédia tel qu'un décodeur de télévision numérique ou un téléviseur muni d'un module de communication Internet. L'application est configurée pour initialiser un appariement basé sur l'identificateur personnel unique, c'est-à-dire associer le récepteur multimédia avec un équipement mobile connecté aux services du réseau mobile en utilisant l'adresse IP publique dudit récepteur multimédia. D'une manière générale, le récepteur multimédia transmet un message sous forme de courrier électronique (e-mail ou courriel) ou d'un message court (message SMS) à l'équipement mobile dans lequel une application appropriée fournit une adresse formant un lien et des paramètres d'identification nécessaires à une connexion sécurisée et authentifiée résistant aux tentatives de piratage.

Grâce à cette méthode, il n'est plus indispensable d'utiliser un réseau domestique avec un protocole spécifique de découverte d'appareils comportant un risque de connexion indésirable d'appareils voisins non autorisés

### Brève description de la figure

L'invention sera mieux comprise grâce à la description détaillée qui va suivre en se référant à la figure annexée qui est donnée à titre d'exemple nullement limitatif, à savoir:

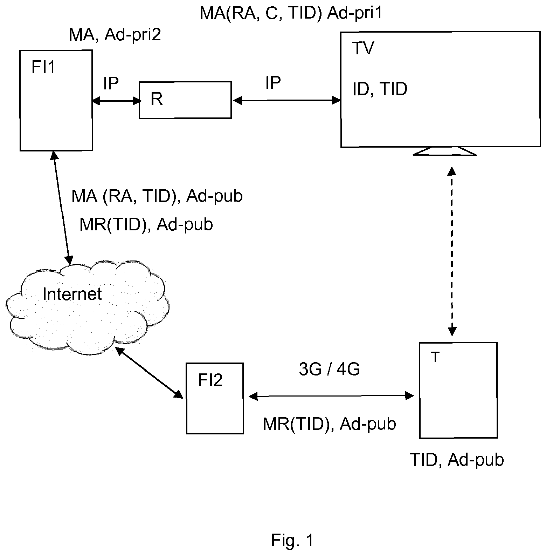

La figure 1 montre un schéma bloc qui représente un récepteur multimédia connecté à un réseau du type IP apparié avec un équipement mobile connecté à un réseau mobile du type 3G / 4G selon la méthode de l'invention.

### Description détaillée de l'invention

Le récepteur multimédia TV peut être constitué d'un téléviseur, d'un récepteur décodeur connecté localement à un téléviseur, d'un ordinateur personnel ou autre unité multimédia pourvue d'un écran d'affichage et d'une interface IP permettant une connexion à Internet par exemple via un routeur R connecté à un serveur FI1 distant d'un fournisseur de services Internet. La connexion entre le récepteur multimédia TV et le routeur R peut-être réalisée au moyen d'un câble ou d'une liaison sans fil du type WiFi. D'autres appareils peuvent également être connectés au routeur R en formant un réseau local dont le routeur R joue le rôle d'une passerelle vers le serveur du fournisseur Internet FI1. Le routeur R peut également être constitué d'un serveur local d'un réseau local (LAN / WLAN) gérant une pluralité d'appareils.

L'équipement mobile T se présente de préférence sous forme d'un téléphone portable intelligent ou smart phone, d'une tablette ou d'un assistant personnel comportant un écran, un module de communication à un réseau mobile du type 3G ou 4G ou autre réseau mobile à grand débit de données ou à large bande apte à établir une connexion vers des services Internet.

Lors d'une phase d'initialisation, un utilisateur introduit à l'aide d'une télécommande, d'un clavier, ou tout autre dispositif de pointage, un identifiant TID personnel unique dans une application installée dans le récepteur multimédia TV associée à l'interface de communication avec le réseau IP. Cet identifiant TID se compose de préférence d'un numéro de téléphone, d'une adresse de courrier électronique ou tout autre identifiant permettant de reconnaître de manière unique l'utilisateur de l'équipement mobile T sur le réseau mobile. L'application, activée par l'utilisateur, compose un message MA contenant au moins une requête d'appariement RA et une commande C permettant un enregistrement d'une adresse publique Ad-pub unique du récepteur multimédia TV sur le réseau IP. Le message MA final transmis par le réseau IP à l'équipement mobile T comprend la requête d'appariement RA, l'adresse publique Ad-pub unique du récepteur multimédia TV et l'adresse de l'équipement mobile incluant son identifiant TID sous forme d'un numéro de téléphone ou d'une adresse de courrier électronique.

Une adresse IP est attribuée à chaque interface avec le réseau de tout dispositif informatique (routeur, ordinateur, modem ADSL, imprimante réseau, etc) connecté à un réseau utilisant le protocole IP pour communiquer avec les différents dispositifs. Cette adresse IP est attribuée soit individuellement par un administrateur d'un réseau local (en général une adresse IP fixe), soit automatiquement via le protocole DHCP (Dynamic Host Configuration Protocol). Si un ordinateur du réseau dispose de plusieurs interfaces, chacune dispose d'une adresse IP spécifique. Une interface peut également disposer de plusieurs adresses IP.

La transmission de données utilisant le protocole IP s'effectue par paquets dont chacun contient l'adresse IP de l'émetteur ainsi que l'adresse IP du destinataire. Les routeurs IP acheminent les paquets de données vers la destination de proche en proche en passant par une ou plusieurs interfaces intermédiaires ayant chacune leur propre adresse IP.

Selon un exemple de configuration, le récepteur multimédia TV transmettant une requête vers le réseau Internet utilise une première adresse IP privée Ad-pri1 non unique pour acheminer la requête vers un routeur R DSL (Digital Subscriber Line) qui possède une adresse IP privée Ad-pri2. Le routeur R utilise également cette adresse privée Ad-pri2 pour relayer la requête vers un serveur FI1 d'un fournisseur de services Internet sur le réseau IP. Ce serveur FI1 convertit l'adresse IP privée de chaque paquet reçu du routeur R en adresse unique correspondant à un utilisateur spécifique répertorié dans une base de données du serveur FI1 avant de retransmettre les données vers un destinataire final. Cette adresse unique est appelée adresse publique car elle peut être mise à disposition d'un destinataire quelconque choisi par l'utilisateur en l'occurrence un équipement mobile T à apparier avec le récepteur multimédia TV.

Une adresse IP d'un ordinateur au niveau local est dite privée comme les adresses des interfaces utilisées pour la transmission des paquets vers un serveur Internet.

Les adresses IPv4 (IP version 4) sont dites publiques si elles sont enregistrées et routables sur Internet, elles sont donc uniques mondialement. À l'inverse, les adresses privées ne sont utilisables que dans un réseau local, et sont uniques que dans ce réseau. La traduction d'adresses réseau permet de transformer des adresses privées en adresses publiques et d'accéder à Internet à partir d'un ordinateur d'un réseau privé.

Dans un réseau IP en mode IPv6 (IP version 6) les adresses sont codées sur 16 octets au lieu de 4 octets pour IPv4. Cette possibilité de disposer d'un nombre beaucoup plus important d'adresses permet d'attribuer une adresse unique à chaque dispositif connecté au réseau sans qu'il soit nécessaire de convertir des adresses privées locales non uniques en adresses publiques uniques.

Lorsque l'équipement mobile T reçoit le message MA, il retourne un message de réponse MR à la requête au récepteur multimédia TV en utilisant l'adresse publique unique Ad-pub. Ce message de réponse MR, contenant au moins l'identifiant TID unique de l'équipement mobile T, transite par le réseau mobile 3G / 4G via un serveur FI2 d'un fournisseur de services Internet sur réseau mobile en passant par le serveur FI1 du réseau IP qui détermine le destinataire, en l'occurrence le récepteur multimédia TV, grâce à l'adresse publique unique Ad-pub.

Avant d'établir un appariement, le récepteur multimédia TV vérifie l'identifiant TID unique de l'équipement mobile T reçu par le message de réponse MR en le comparant avec l'identifiant préalablement introduit dans l'application qui a composé le message MA de requête d'appariement.

Lorsque la vérification est réussie, c'est-à-dire lorsque les identifiants comparés sont identiques, l'appariement entre l'équipement mobile T et le récepteur multimédia TV peut s'établir. Cet appariement permet à un équipement mobile T dûment identifié d'interagir avec le récepteur multimédia TV. Aucun autre équipement mobile ne pourra ainsi communiquer avec le récepteur multimédia sans avoir effectué les étapes de la méthode d'appariement. Un ou des équipements mobiles supplémentaires peuvent également être appariés à condition d'introduire l'identifiant de chacun d'entre eux dans l'application du récepteur multimédia qui compose un message MA à destination de chaque équipement mobile T.

Dans le cas contraire où l'identifiant reçu diffère de celui enregistré par l'application du récepteur multimédia, l'appariement échoue et l'utilisateur peut être invité à recommencer le procédé par l'introduction d'un identifiant correct.

Un équipement mobile T apparié joue un rôle de dispositif d'accompagnement du récepteur multimédia TV en partageant par exemple l'affichage (écran compagnon) ou en échangeant diverses données comme des compléments de contenu ou des informations avec le récepteur multimédia. Chaque paquet de données échangé comporte l'adresse publique de l'équipement mobile et du récepteur multimédia.

En général, l'équipement mobile T apparié se trouve dans le voisinage du récepteur multimédia TV, c'est-à-dire dans un rayon de quelques mètres. Selon une variante, cet aspect de proximité de position des deux dispositifs peut être vérifié en sus de la vérification des identifiants afin d'éviter un appariement d'un récepteur multimédia éloigné hors du champ de vision de l'équipement mobile. Cette vérification peut par exemple s'effectuer localement par un signal sonore émis soit par le récepteur multimédia TV, soit par l'équipement mobile T et capté par le dispositif correspondant. Selon une autre variante, un équipement mobile T muni d'un émetteur de lumière infrarouge à la manière d'une télécommande peut transmettre un signal optique au récepteur multimédia TV afin de vérifier la proximité des deux dispositifs. L'inverse peut être également envisagé avec un émetteur intégré dans le récepteur multimédia et le récepteur infrarouge dans l'équipement mobile. Une fois les vérifications de conformité des identifiants et de la proximité de position effectuées, l'appariement peut être établi.

Selon une variante, le récepteur multimédia TV peut par exemple générer une clé KP d'encryption dérivée de l'identifiant de l'équipement mobile TID introduit lors de l'initialisation de l'appariement en utilisant un algorithme cryptographique prédéfini. Cette clé KP, aussi appelée clé d'appariement, permet de créer un canal sécurisé entre les deux dispositifs qui échangent ainsi des données encryptées avec la clé. Dans ce cas, le message de requête d'appariement contient cette clé qui sera enregistrée par l'équipement mobile T. Lors de la vérification de l'appariement, la clé KP générée par le récepteur multimédia TV est comparée avec la clé transmise par le message de réponse MR en sus de la vérification des identifiants. Cette double vérification permet d'éviter qu'un équipement non autorisé ayant capturé la clé d'appariement KP de manière illégale puisse se connecter au récepteur multimédia.

L'appariement entre les deux dispositifs peut être statique ou dynamique. Lors d'un appariement statique, la clé d'appariement enregistrée dans chacun des deux dispositifs (TV, T) est unique et constante. Elle est définie une seule fois après l'introduction par l'utilisateur de l'identifiant TID de l'équipement mobile T dans le récepteur multimédia TV et transmise à l'équipement mobile T avec le message de requête d'appariement MA.

Lors d'un appariement dynamique, la clé d'appariement KP change lors de chaque requête d'appariement de l'équipement mobile avec le récepteur multimédia. Par exemple l'algorithme de génération utilise un nombre aléatoire différent à chaque initialisation d'un appariement.

Une interface utilisateur de l'application du récepteur multimédia peut proposer un choix entre un appariement statique à clé permanente ou dynamique à clé éphémère.

La clé d'appariement KP peut également être dérivée d'un identifiant ID du récepteur multimédia TV ou d'une combinaison des identifiants du récepteur multimédia TV et de l'équipement mobile T. Selon une autre variante, la clé d'appariement KP peut être arbitraire sans dépendance des identifiants de l'un ou de l'autre des dispositifs à apparier.

L'appariement avec l'identifiant de l'équipement mobile seul peut être considéré comme statique sans encryption des données échangées entre les deux dispositifs.

Selon une variante, le message de requête d'appariement MA peut contenir en sus de la requête d'appariement et de la commande d'acquisition d'une adresse publique un ou plusieurs paramètres supplémentaires tels que : une donnée temporelle comme la date et l'heure courante et/ou une date et heure d'expiration de l'appariement, un identificateur du récepteur multimédia sous forme d'un numéro de série ou d'un adresse MAC (Media Access Control), etc. L'équipement mobile T retransmet dans le message de réponse MR ces paramètres supplémentaires au récepteur multimédia TV pour vérification de conformité.

Une empreinte obtenue par l'application d'une fonction de hachage unidirectionnelle et sans collision (Hash) sur tout ou partie des paramètres du message de requête d'appariement MA et du message de réponse MR peut également être incluse dans ces messages. Cette empreinte est recalculée par le récepteur multimédia TV à la réception du message de réponse MR et comparée avec l'empreinte du message afin de vérifier l'intégrité des paramètres.

Une empreinte peut également être calculée sur la clé d'appariement pour les variantes où une telle clé est générée. Elle peut être encryptée avec la clé d'appariement KP pour former une signature. A la réception du message de réponse MR, le récepteur multimédia TV décrypte la signature avec la clé d'appariement KP et compare l'empreinte ainsi obtenue avec une empreinte recalculée par le récepteur multimédia TV afin de vérifier l'intégrité de la clé d'appariement KP.

Ce n'est que lorsque l'appariement est établi selon l'une des variantes décrites ci-dessus, que la communication entre un récepteur multimédia TV et au moins un équipement mobile T peut s'effectuer, le récepteur multimédia TV étant connecté à un réseau de communication IP et équipement mobile T étant connecté à un réseau mobile de communication utilisant un protocole de communication distinct de celui du réseau IP. L'équipement mobile T échange avec le récepteur multimédia TV des paquets de données munis de l'adresse publique unique Ad-pub dudit récepteur multimédia TV et d'une adresse publique unique de l'équipement mobile T comportant au moins l'identifiant unique TID dudit équipement mobile T. Ces paquets de données concernent par exemple une requête de partage d'affichage, des compléments d'informations et/ou de contenus, des liens vers des sites Internet relatif au contenu en cours de réception, un guide de programme, etc.

Etant donné que les adresses publiques uniques sont connues et enregistrées de part et d'autre du récepteur multimédia TV et de l'équipement mobile T, la communication entre ces deux dispositifs peut être initiée indifféremment par l'un ou l'autre de ceux-ci pour autant qu'ils soient appariés et qu'une application de communication soit activée dans les deux dispositifs.

Les paquets de données transmis par l'équipement mobile T transitent via le réseau mobile 3G / 4G vers le serveur FI2 de services Internet sur réseau mobile qui les achemine à travers Internet vers le serveur FI1 du fournisseur de services Internet IP qui les transmet vers le récepteur multimédia TV via le routeur R. Le chemin inverse est suivi par les paquets de données adressés à l'équipement mobile T par le récepteur multimédia TV. Vu de l'utilisateur, les deux dispositifs communiquent entre eux comme s'ils étaient connectés localement de manière conventionnelle via un réseau domestique sans fil WLAN (Wireless Local Area Network) ou via une interface sans fil du type Bluetooth ou autre.

## Revendications

1. Méthode d'appariement entre un récepteur multimédia (TV) connecté à un réseau de communication IP et au moins un équipement mobile (T) connecté à un réseau mobile de communication utilisant un protocole de communication distinct du réseau de communication IP, comprenant les étapes suivantes :
- introduction, par un dispositif de pointage associé au récepteur multimédia (TV), d'un identifiant unique (TID) de l'équipement mobile (T) dans une application associée à une interface de communication avec le réseau de communication IP du récepteur multimédia (TV),
- transmission par le récepteur multimédia (TV) à l'équipement mobile (T) d'un message (MA) comprenant au moins une requête d'appariement et une commande d'acquisition d'une adresse publique unique (Ad-pub) du récepteur multimédia (TV) sur le réseau IP, ledit équipement mobile (T) étant identifié sur le réseau mobile de communication par une adresse associée à l'identifiant unique (TID),
- réception par l'équipement mobile (T) du message (MA) et transmission d'un message de réponse (MR) au récepteur multimédia (TV) identifié sur le réseau de communication IP par l'adresse publique unique (Ad-pub) préalablement acquise, ledit message de réponse (MR) comprenant au moins l'identifiant unique (TID) de l'équipement mobile (T),
- vérification par le récepteur multimédia (TV) de l'identifiant unique (TID) de l'équipement mobile (T) reçu par le message de réponse (MR) par comparaison avec l'identifiant unique (TID) introduit dans l'application de l'interface de communication avec le réseau de communication IP,
- lorsque la vérification est réussie, établissement de l'appariement entre l'équipement mobile (T) et le récepteur multimédia (TV), l'équipement mobile (T) constituant un dispositif compagnon du récepteur multimédia (TV) apte à échanger avec ledit récepteur multimédia (TV) des paquets de données comportant chacun l'adresse publique (Ad-pub) du récepteur multimédia (TV) et de l'équipement mobile (T) comportant au moins l'identifiant unique (TID) dudit équipement mobile (T).

2. Méthode selon la revendication 1 **caractérisée** en qu'elle comprend une étape de vérification de proximité de position de l'équipement mobile (T) par rapport au récepteur multimédia (TV) effectuée par un signal sonore ou optique émis soit par le récepteur multimédia (TV), soit par l'équipement mobile (T) et capté respectivement soit par l'équipement mobile (T), soit par le récepteur multimédia (TV).

3. Méthode selon la revendication 1 ou 2 **caractérisée** en qu'elle comprend une étape de génération par le récepteur multimédia (TV) d'une clé d'appariement (KP), ladite clé d'appariement (KP) étant destinée à encrypter les données échangées entre l'équipement mobile (T) et le récepteur multimédia (TV).

4. Méthode selon la revendication 3 **caractérisée** en que le récepteur multimédia (TV) transmet la clé d'appariement (KP) à l'équipement mobile (T) dans le message de requête d'appariement (MA), ledit équipement mobile (T) transmet ladite clé d'appariement (KP) dans le message de réponse (MR) au récepteur multimédia (TV) pour vérification de conformité avec la clé d'appariement (KP) préalablement générée.

5. Méthode selon la revendication 3 ou 4 **caractérisée** en que la clé d'appariement (KP) enregistrée dans le récepteur multimédia (TV) et dans l'équipement mobile (T) est unique et constante.

6. Méthode selon la revendication 3 ou 4 **caractérisée** en que la clé d'appariement (KP) change lors de chaque requête d'appariement de l'équipement mobile (T) avec le récepteur multimédia (TV).

7. Méthode selon l'une des revendications 3 à 6 **caractérisée** en que la clé d'appariement (KP) est dérivée de l'identifiant (TID) de l'équipement mobile (T) introduit lors de l'initialisation de l'appariement en utilisant un algorithme cryptographique prédéfini ou d'un l'identifiant (ID) du récepteur multimédia (TV) ou d'une combinaison des identifiants de l'équipement et du récepteur multimédia.

8. Méthode selon l'une des revendications 1 à 7 **caractérisée en ce que** le message de requête d'appariement (MA) contient en sus de la requête d'appariement et de la commande d'acquisition d'une adresse publique un ou plusieurs paramètres supplémentaires comprenant la date et l'heure courante et/ou une date et heure d'expiration de l'appariement ou un identificateur (ID) du récepteur multimédia (TV).

9. Méthode selon la revendication 9 **caractérisée en ce que** l'équipement mobile (T) retransmet au récepteur multimédia (TV) dans le message de réponse (MR) lesdits paramètres supplémentaires au récepteur multimédia (TV) pour vérification de conformité.

10. Méthode selon l'une des revendications 1 à 9 **caractérisée en ce que** le message de requête d'appariement (MA) contient une empreinte obtenue par l'application d'une fonction de hachage unidirectionnelle et sans collision sur tout ou partie des paramètres dudit message de requête d'appariement (MA).

11. Méthode selon la revendication 10 **caractérisée en ce que** l'équipement mobile (T) retransmet dans le message de réponse (MR) au récepteur multimédia (TV) ladite empreinte, ledit récepteur multimédia (TV) compare l'empreinte avec une empreinte recalculée par ledit récepteur multimédia (TV) afin de vérifier l'intégrité des paramètres.

12. Méthode selon l'une des revendications 3 à 9 **caractérisée en ce que** le message de requête d'appariement (MA) contient une empreinte obtenue par l'exécution d'une fonction de hachage unidirectionnelle et sans collision sur la clé d'appariement (KP), ladite empreinte étant encryptée avec la clé d'appariement (KP) pour former une signature.

13. Méthode selon la revendication 10 **caractérisée en ce que** l'équipement mobile (T) retransmet dans le message de réponse (MR) au récepteur multimédia (T) ladite signature, ledit récepteur multimédia (TV) décrypte la signature avec la clé d'appariement (KP) et compare l'empreinte obtenue avec une empreinte recalculée par le récepteur multimédia (TV) afin de vérifier l'intégrité de la clé d'appariement (KP).

14. Equipement mobile configuré pour un appariement avec un récepteur multimédia (TV) connecté à un réseau de communication IP, l'équipement mobile (T) étant connecté à un réseau mobile de communication utilisant un protocole de communication distinct du réseau IP et comportant une application configurée pour:
recevoir un message (MA) comprenant au moins une requête d'appariement et une commande d'acquisition d'une adresse publique unique (Ad-pub) du récepteur multimédia (TV) sur le réseau de communication IP, ledit équipement mobile (T) étant identifié sur le réseau mobile de communication par une adresse associée à un identifiant unique (TID) dudit équipement mobile (T),
transmettre un message de réponse (MR) au récepteur multimédia (TV) identifié par l'adresse publique unique (Ad-pub) préalablement acquise, ledit message de réponse (MR) comprenant au moins l'identifiant unique (TID) de l'équipement mobile (T) préalablement introduit par un dispositif de pointage associé au récepteur multimédia (TV) dans une application associée à une interface de communication avec le réseau de communication IP du récepteur multimédia (TV),
établir un appariement avec le récepteur multimédia (TV), ledit équipement mobile (T) constituant un dispositif compagnon du récepteur multimédia (TV) apte à échanger avec ledit récepteur multimédia (TV) des paquets de données comportant chacun l'adresse publique (Ad-pub) du récepteur multimédia (TV) et de l'équipement mobile (T) comportant au moins l'identifiant unique (TID) dudit équipement mobile (T)..

15. Récepteur multimédia configuré pour un appariement avec un équipement mobile selon la revendication 14 comportant une application associée à une interface de communication avec le réseau de communication IP configurée pour :
- recevoir un identifiant unique (TID) de l'équipement mobile (T) transmis par un dispositif de pointage associé au récepteur multimédia (TV),
- transmettre à l'équipement mobile (T) un message (MA) comprenant au moins une requête d'appariement et une commande d'acquisition d'une adresse publique unique (Ad-pub) dudit récepteur multimédia (TV) sur le réseau de communication IP, ledit équipement mobile (T) étant identifié sur le réseau mobile de communication par une adresse associée à l'identifiant unique (TID),
- recevoir un message de réponse (MR) transmis par l'équipement mobile (T), ledit récepteur multimédia (TV) étant identifié sur le réseau de communication IP par l'adresse publique unique (Ad-pub) préalablement acquise, ledit message de réponse (MR) comprenant au moins l'identifiant unique (TID) de l'équipement mobile (T),
- vérifier l'identifiant unique (TID) de l'équipement mobile (T) reçu par le message de réponse (MR) par comparaison avec l'identifiant unique (TID) préalablement transmis par le dispositif de pointage,
- lorsque la vérification est réussie, établir un appariement avec l'équipement mobile (T), ledit récepteur multimédia (TV) étant apte à échanger avec ledit équipement mobile (T) des paquets de données comportant chacun l'adresse publique (Ad-pub) du récepteur multimédia (TV) et de l'équipement mobile (T) comportant au moins l'identifiant unique (TID) dudit équipement mobile (T).

## Patentansprüche

1. Verfahren zur Paarung zwischen einem Multimediaempfänger (TV), der mit einem Kommunikationsnetz IP verbunden ist, und mindestens einem Mobilgerät (T), das mit einem Mobilkommunikationsnetz verbunden ist, unter Benutzung eines Kommunikationsprotokolls, das sich vom Kommunikationsnetzes IP unterscheidet, mit den folgenden Schritten:
- Einführung, durch eine Zeigevorrichtung, die mit dem Multimediaempfänger (TV) verbunden ist, einer eindeutigen Kennung (TID) des Mobilgeräts (T) in eine Anwendung, die mit einer Schnittstelle zur Kommunikation mit dem Kommunikationsnetz IP des Multimediaempfängers (TV) verbunden ist,
- Übertragung, durch den Multimediaempfänger (TV) an das Mobilgerät (T), einer Nachricht (MA), die mindestens eine Paarungsanfrage und einen Befehl zur Erfassung einer eindeutigen öffentlichen Adresse (Ad-pub) des Multimediaempfängers (TV) auf dem IP-Netz umfasst, wobei das Mobilgerät (T) auf dem Mobilkommunikationsnetz durch eine Adresse identifiziert ist, die mit der eindeutigen Kennung (TID) verbunden ist,
- Empfang, durch das Mobilgerät (T), der Nachricht (MA) und Übertragung einer Antwortnachricht (MR) an den Multimediaempfänger (TV), identifiziert auf dem IP-Kommunikationsnetz durch die vorher erfasste eindeutige öffentliche Adresse (Ad-pub), wobei die Antwortnachricht (MR) mindestens die eindeutige Kennung (TID) des Mobilgeräts (T) umfasst,
- Überprüfung, durch den Multimediaempfänger (TV), der eindeutigen Kennung (TID) des Mobilgeräts (T), die von der Antwortnachricht (MR) empfangen wurde, durch Vergleich mit der eindeutigen Kennung (TID), die in die Anwendung der Schnittstelle zur Kommunikation mit dem Kommunikationsnetz IP eingeführt wurde,
- wenn die Überprüfung erfolgreich ist, Erstellung der Paarung zwischen dem Mobilgerät (T) und dem Multimediaempfänger (TV), wobei das Mobilgerät (T) ein Partnergerät des Multimediaempfängers (TV) und fähig ist, mit dem Multimediaempfänger (TV) Datenpakete auszutauschen, die jeweils die öffentliche Adresse (Ad-pub) des Multimediaempfängers (TV) und des Mobilgeräts (T) enthalten, die mindestens die eindeutige Kennung (TID) des genannten Mobilgeräts (T) enthält.

2. Verfahren nach Anspruch 1, **gekennzeichnet dadurch, dass** es ein Überprüfungsschritt der Positionsnähe des Mobilgeräts (T) in Bezug zum Multimediaempfänger (TV) umfasst, mittels eines akustischen oder optischen Signals, ausgegeben entweder vom Multimediaempfänger (TV) oder vom Mobilgerät (T) und empfangen entweder vom Mobilgerät (T) oder vom Multimediaempfänger (TV).

3. Verfahren nach Anspruch 1 oder 2, **dadurch gekennzeichnet, dass** es ein Schritt der Erzeugung eines Paarungsschlüssels (KP) durch den Multimediaempfänger (TV) umfasst, wobei der Paarungsschlüssel (KP) dazu bestimmt ist, die zwischen dem Mobilgerät (T) und dem Multimediaempfänger (TV) ausgetauschten Daten zu verschlüsseln.

4. Verfahren nach Anspruch 3, **gekennzeichnet dadurch, dass** der Multimediaempfänger (TV) den Paarungsschlüssel (KP) an das Mobilgerät (T) in der Paarungsanfragenachricht (MA) überträgt, worauf das Mobilgerät (T) den Paarungsschlüssel (KP) in der Antwortnachricht (MR) an den Multimediaempfänger (TV) überträgt, zur Überprüfung der Konformität mit dem vorher erzeugten Paarungsschlüssel (KP).

5. Verfahren nach Anspruch 3 oder 4, **gekennzeichnet dadurch, dass** der in dem Multimediaempfänger (TV) und in dem Mobilgerät (T) gespeicherte Paarungsschlüssel (KP) eindeutig und konstant ist.

6. Verfahren nach Anspruch 3 oder 4, **gekennzeichnet dadurch, dass** der Paarungsschlüssel (KP) sich bei jeder Paarungsanfrage des Mobilgeräts (T) mit dem Multimediaempfänger (TV) verändert.

7. Verfahren nach einem der Ansprüche 3 bis 6, **gekennzeichnet dadurch, dass** der Paarungsschlüssel (KP) von der eindeutigen Kennung (TID) des Mobilgeräts (T) stammt, der bei der Initialisierung der Paarung eingeführt wurde, unter Benutzung eines vorherbestimmten kryptografischen Algorithmus oder einer Kennung (ID) des Multimediaempfängers (TV) oder einer Kombination der Kennungen des Geräts und des Multimediaempfängers.

8. Verfahren nach einem der Ansprüche 1 bis 7, **dadurch gekennzeichnet, dass** die Paarungsanfragenachricht (MA) außer der Paarungsanfrage und dem Befehl zur Erfassung einer öffentlichen Adresse einen oder mehrere zusätzliche Parameter enthält, die das aktuelle Datum und Uhrzeit und/oder Datum und Uhrzeit des Ablaufs der Paarung oder eine Kennung (ID) des Multimediaempfängers (TV) umfassen.

9. Verfahren nach Anspruch 9, **dadurch gekennzeichnet, dass** das Mobilgerät (T) an den Multimediaempfänger (TV) in der Antwortnachricht (MR) die zusätzlichen Parameter zum Multimediaempfänger (TV) zur Überprüfung der Konformität zurücksendet.

10. Verfahren nach einem der Ansprüche 1 bis 9, **dadurch gekennzeichnet, dass** die Paarungsanfragenachricht (MA) einen Digest enthält, der durch die Anwendung einer unidirektionalen und kollisionsfreien Hashfunktion auf alle oder einen Teil der Parameter der Paarungsanfragenachricht (MA) erhalten ist.

11. Verfahren nach Anspruch 10, **dadurch gekennzeichnet, dass** das Mobilgerät (T) in der Antwortnachricht (MR) an den Multimediaempfänger (TV) besagten Digest zurücksendet, wonach der Multimediaempfänger (TV) den Digest mit einem vom Multimediaempfänger (TV) nachgerechneten Digest vergleicht, um die Integrität der Parameter zu überprüfen.

12. Verfahren nach einem der Ansprüche 3 bis 9, **dadurch gekennzeichnet, dass** die Paarungsanfragenachricht (MA) einen durch die Ausführung einer unidirektionalen und kollisionsfreien Hashfunktion auf dem Paarungsschlüssel (KP) erhaltenen Digest enthält, wobei der Digest mit dem Paarungsschlüssel (KP) verschlüsselt ist, zur Bildung einer Signatur.

13. Verfahren nach Anspruch 10, **dadurch gekennzeichnet, dass** das Mobilgerät (T) in der Antwortnachricht (MR) an den Multimediaempfänger (T) besagte Signatur zurücksendet, der Multimediaempfänger (TV) entschlüsselt die Signatur mit dem Paarungsschlüssel (KP) und vergleicht den erhaltenen Digest mit einem durch den Multimediaempfänger (TV) nachgerechneten Digest, um die Integrität des Paarungsschlüssels (KP) zu überprüfen.

14. Mobilgerät, konfiguriert für eine Paarung mit einem Multimediaempfänger (TV), der mit einem IP-Kommunikationsnetz verbunden ist, wobei das Mobilgerät (T) mit einem Mobilkommunikationsnetz verbunden ist, das ein Kommunikationsprotokoll benutzt, das von dem des IP-Netzes verschieden ist, und mit einer Anwendung, die konfiguriert ist, um:
eine Nachricht (MA) zu empfangen, die mindestens eine Paarungsanfrage umfasst und einen Befehl zur Erfassung einer eindeutigen öffentlichen Adresse (Ad-pub) des Multimediaempfängers (TV) auf dem IP-Kommunikationsnetz, wobei das Mobilgerät (T) auf dem Mobilkommunikationsnetz durch eine Adresse identifiziert ist, die mit einer eindeutigen Kennung (TID) des genannten Mobilgeräts (T) verbunden ist,
eine Antwortnachricht (MR) an den Multimediaempfänger (TV) zu übertragen, der durch die vorher erfasste eindeutige öffentliche Adresse (Ad-pub) identifiziert ist, wobei die Antwortnachricht (MR) mindestens die eindeutige Kennung (TID) des Mobilgeräts (T) umfasst, die vorher durch eine Zeigevorrichtung eingeführt wurde, der mit dem Multimediaempfänger (TV) verbunden ist, in einer Anwendung, die mit einer Schnittstelle zur Kommunikation mit dem IP-Kommunikationsnetz des Multimediaempfängers (TV) verbunden ist,
eine Paarung mit dem Multimediaempfänger (TV) aufzubauen, wobei das Mobilgerät (T) ein Partnergerät des Multimediaempfängers (TV) ist, das fähig ist, mit dem Multimediaempfänger (TV) Datenpakete auszutauschen, von denen jedes die öffentliche Adresse (Ad-pub) des Multimediaempfängers (TV) und des Mobilgeräts (T) umfasst, mit mindestens der eindeutigen Kennung (TID) des genannten Mobilgeräts (T).

15. Multimediaempfänger, konfiguriert für eine Paarung mit einem Mobilgerät nach Anspruch 14, mit einer Anwendung, die mit einer Schnittstelle zur Kommunikation mit dem IP-Kommunikationsnetz verbunden ist, die konfiguriert ist, um:
- eine eindeutige Kennung (TID) des Mobilgeräts (T) zu empfangen, die von einer mit dem Multimediaempfänger (TV) verbundenen Zeigevorrichtung übertragen wird,
- an das Mobilgerät (T) eine Nachricht (MA) zu übertragen, die mindestens eine Paarungsanfrage umfasst und einen Befehl zur Erfassung einer eindeutigen öffentlichen Adresse (Ad-pub) des genannten Multimediaempfängers (TV) auf dem IP-Kommunikationsnetz, wobei das Mobilgerät (T) auf dem Mobilkommunikationsnetz durch eine Adresse identifiziert ist, die mit der eindeutigen Kennung (TID) verbunden ist,
- eine Antwortnachricht (MR) zu empfangen, die vom Mobilgerät (T) übertragen wird, wobei der Multimediaempfänger (TV) auf dem IP-Kommunikationsnetz durch die vorher erfasste eindeutige öffentliche Adresse (Ad-pub) identifiziert ist, wobei die Antwortnachricht (MR) mindestens die eindeutige Kennung (TID) des Mobilgeräts (T) umfasst,
- die eindeutige Kennung (TID) des Mobilgeräts (T) zu überprüfen, die von der Antwortnachricht (MR) empfangen wurde, durch Vergleich mit der eindeutigen Kennung (TID), die vorher von der Zeigevorrichtung übertragen wurde,
- wenn die Überprüfung erfolgreich ist, eine Paarung mit dem Mobilgerät (T) aufzubauen, wobei der Multimediaempfänger (TV) fähig ist, mit dem Mobilgerät (T) Datenpakete auszutauschen, von denen jedes die öffentliche Adresse (Ad-pub) des Multimediaempfängers (TV) und des Mobilgeräts (T) umfasst, mit mindestens der eindeutigen Kennung (TID) des genannten Mobilgeräts (T).

## Claims

1. A method for pairing a multimedia receiver (TV) connected to an IP communication network with at least one mobile equipment (T) connected to a mobile communication network using a communication protocol different from the protocol of the IP communication network, comprising steps of:
- introducing, by a pointing device associated with the multimedia receiver (TV), a unique identifier (TID) of the mobile equipment (T) in an application associated with a communication interface with the IP communication network of the multimedia receiver (TV),
- transmitting, by the multimedia receiver (TV), a message (MA) to the mobile equipment (T), the message (MA) comprising at least one pairing request and a command for acquiring a unique public address (Ad-pub) of the multimedia receiver (TV) on the IP network, said mobile equipment (T) being identified on the mobile communication network by an address associated with the unique identifier (TID),
- receiving, by the mobile equipment (T), the message (MA) and transmitting a response message (MR) to the multimedia receiver (TV) identified on the IP communication network by the unique public address (Ad-pub) previously acquired, said response message (MR) comprising at least the unique identifier (TID) of the mobile equipment (T);
- verifying, by the multimedia receiver (TV), the unique identifier (TID) of the mobile equipment (T) received by the response message (MR) by comparison with the unique identifier (TID) introduced into the application of the communication interface with the IP communication network;
- when the verification is successful, establishing the pairing between the mobile equipment (T) and the multimedia receiver (TV), the mobile equipment (T) forming a companion device of the multimedia receiver (TV) able to exchange with said multimedia receiver (TV) data packets each comprising the public address (Ad-pub) of the multimedia receiver (TV) and of the mobile equipment (T) comprising at least the unique identifier (TID) of said mobile equipment (T).

2. The method according to claim 1 **characterized in that** it comprises a step of proximity verification of the mobile equipment (T) position in relation to the multimedia receiver (TV) carried out by an audible or optical signal emitted either by the multimedia receiver (TV) or by the mobile equipment (T) and received either by the mobile equipment (T) or by the multimedia receiver (TV).

3. The method according to claim 1 or 2 **characterized in that** it comprises a step of generating by the multimedia receiver (TV) a pairing key (KP), said a pairing key (KP) being intended to encrypt data exchanged between the mobile equipment (T) and the multimedia receiver (TV).

4. The method according to claim 3 **characterized in that** the multimedia receiver (TV) transmits the pairing key (KP) to the mobile equipment (T) in the pairing request message (MA), said mobile equipment (T) transmitting said pairing key (KP) in the response message (MR) to the multimedia receiver (TV) for conformity verification with the pairing key (KP) previously generated.

5. The method according to claim 3 or 4 **characterized in that** the pairing key (KP) registered in the multimedia receiver (TV and in the mobile equipment (T) is unique and constant.

6. The method according to claim 3 or 4 **characterized in that** the pairing key (KP) changes during each pairing request of the mobile equipment (T) with the multimedia receiver (TV).

7. The method according to anyone of claims 3 to 6 **characterized in that** the pairing key (KP) is derived from the identifier (TID) of the mobile equipment (T) introduced during the initialization of the pairing by using a predefined cryptographic algorithm or from an identifier (ID) of the multimedia receiver (TV) or a combination of the identifiers of the equipment and of the multimedia receiver.

8. The method according to anyone of claims 1 to 7 **characterized in that** the pairing request message (MA) contains, in addition to the pairing request and the command for acquiring a public address, one or more supplementary parameters comprising the current date and time and/or a date and hour of expiration of the pairing or an identifier (ID) of the multimedia receiver (TV).

9. The method according to claim 8 **characterized in that** the mobile equipment (T) retransmits to the multimedia receiver (TV), in the response message (MR), said supplementary parameters to the multimedia receiver (TV) for conformity verification.

10. The method according to anyone of claims 1 to 9 **characterized in that** the pairing request message (MA) contains a digest obtained by the application of a unidirectional and collision free hash function on all or part of the parameters of said pairing request message (MA).

11. The method according to claim 10 **characterized in that** the mobile equipment (T) retransmits in the response message (MR) to the multimedia receiver (TV) said digest, said multimedia receiver (TV) comparing the digest with a digest recalculated by said multimedia receiver (TV) in order to verify the integrity of the parameters.

12. The method according to anyone of claims 3 to 9 **characterized in that** the pairing request message (MA) contains a digest obtained by carrying out a unidirectional and collision free hash function on the pairing key (KP), said digest being encrypted with the pairing key (KP) to form a signature.

13. The method according to claim 10 **characterized in that** the mobile equipment (T) retransmits said signature in the response message (MR) to the multimedia receiver (TV), said multimedia receiver (TV) decrypts the signature with the pairing key (KP) and compares the obtained digest with a digest recalculated by the multimedia receiver (TV) in order to verify integrity of the pairing key (KP).

14. A mobile equipment configured to be paired with a multimedia receiver connected to an IP communication network, the mobile equipment (T) being connected to a mobile communication network using a communication protocol different from the IP network and comprising an application configured to:
receive a message (MA) comprising at least one pairing request and a command for acquiring a unique public address (Add-pub) of the multimedia receiver (TV) on the IP communication network, said mobile equipment (T) being identified on the mobile communication network by an address associated with a unique identifier (TID) of said mobile equipment (T),
transmit a response message (MR) to the multimedia receiver (TV) identified by the unique public address (Add-pub) previously acquired, said response message (MR) comprising at least the unique identifier (TID) of the mobile equipment (T) previously introduced by a pointing device associated with the multimedia receiver (TV) in an application associated with a communication interface with the IP communication network of the multimedia receiver (TV),
establish a pairing with the multimedia receiver (TV), said mobile equipment (T) forming a companion device of the multimedia receiver (TV) able to exchange with said multimedia receiver (TV) data packets each comprising the public address (Ad-pub) of the multimedia receiver (TV) and of the mobile equipment (T) comprising at least the unique identifier (TID) of said mobile equipment (T).

15. A multimedia receiver configured to be paired with a mobile equipment according to claim 14 comprising an application associated with a communication interface with the IP communication network configured to:
- receive a unique identifier (TID) of the mobile equipment (T) transmitted by a pointing device associated with the multimedia receiver (TV),
- transmit to the mobile equipment (T) a message (MA) comprising at least one pairing request and a command for acquiring a unique public address (Ad-pub) of said multimedia receiver (TV) on the IP communication network, said mobile equipment (T) being identified on the mobile communication network by an address associated with the unique identifier (TID),
- receive a response message (MR) transmitted by the mobile equipment (T), said multimedia receiver (TV) being identified on the IP communication network by the unique public address (Ad-pub) previously acquired, said response message (MR) comprising at least the unique identifier (TID) of the mobile equipment (T),
- verify the unique identifier (TID) of the mobile equipment (T) received by the response message (MR) by comparison with the unique identifier (TID) previously transmitted by the pointing device,
- when the verification is successful, establish a pairing with the mobile equipment (T), said multimedia receiver (TV) being able to exchange with said mobile equipment (T) data packets each comprising the public address (Ad-pub) of the multimedia receiver (TV) and of the mobile equipment (T) comprising at least the unique identifier (TID) of said mobile equipment (T).
